# EUROPEAN PATENT APPLICATION

(11) **EP 3 778 988 A1**
(43) Date of publication of application: **17.02.2021**
(21) Application number: 19908909.5
(22) Date of filing: 30.05.2019
(51) Int. Cl.: C23C 22/73, C23C 22/62, C23F 1/08, C25D 17/06, F16C 19/36, F16C 33/34

(54) **JIG FOR ROLLING ELEMENT**

(30) Priority: 10.01.2019 JP 2019002798
(71) Applicant: Kawai, Yoichiro, Yokohama-shi, Kanagawa 224-0043 (JP)
(72) Inventor: Kawai, Yoichiro, Yokohama-shi, Kanagawa 224-0043 (JP)
(74) Representative: dompatent von Kreisler Selting Werner - Partnerschaft von Patent- und Rechtsanwälten mbB
(86) International application number: PCT/JP2019/021457
(87) International publication number: WO 2020/144880

(57) **Abstract**

To provide a technology for performing surface treatment on rolling elements without leaving undyed portions or scratches.

A rolling element jig that is a jig to be used when surface treatment is performed on a rolling element,
the rolling element jig including
a jig main body having a contact surface in contact with a surface of the rolling element, wherein
the contact surface includes a first contact surface and a second contact surface that are disposed at opposite positions in the jig main body and support the rolling element at two points, and
the first contact surface and the second contact surface are formed as curved surfaces.

## Description

### Technical Field

The present invention relates to a rolling element jig.

### Background Art

A rolling element is used as a component of a rolling bearing that is used in a rotation support unit of a wind turbine in wind power generation facilities (Patent Literatures 1 and 2). It is known that blackening treatment (chemical conversion treatment for forming an oxide coating) is performed on a rolling element, to prolong the life of the rolling element and reduce slippage of the rolling element (Patent Literature 1).

Conventionally, mesh jigs are used in blackening treatment for rolling elements.

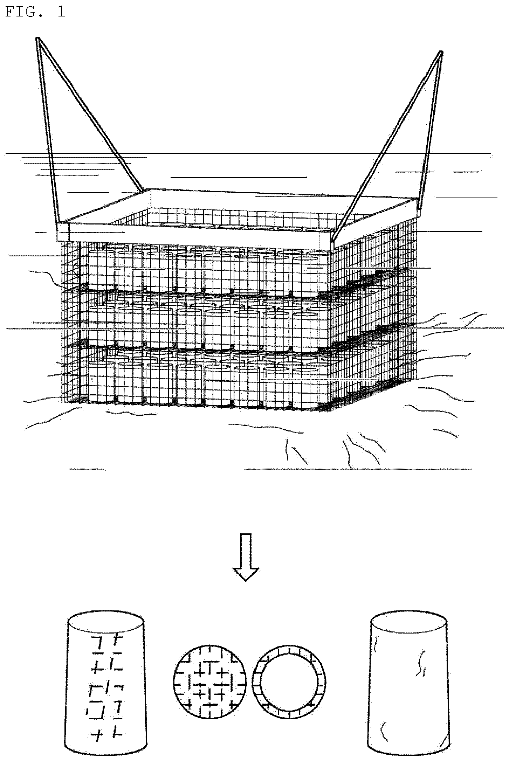

However, the conventional method has a problem, because a rolling element has a mesh mark due to contact with a mesh jig, undyed portions due to overlapping with another rolling element, scratches due to contact with another rolling element, a decrease in the thickness due to undyed portions, or the like (see Fig. 1).

Meanwhile, a method for forming a surface coating by spraying powder onto a cylindrical member is known as a method for performing treatment on a cylindrical member (Patent Literature 3).

### Citation List

### Patent Literatures

Patent Literature 1: JP 2013-96448 A
Patent Literature 2: JP 2018-80793 A
Patent Literature 3: JP 2011-123442 A

### Summary of Invention

### Technical Problem

In view of the above cited references, the present invention aims to provide a technique for performing surface treatment on rolling elements without leaving undyed portions or scratches.

Particularly, a preferred embodiment of the present invention aims to provide a technique capable of performing uniform surface treatment without partial loss of film thickness or damage to rolling elements due to undyed portions.

### Solution to Problem

The present invention for solving the above problem is a jig that is used when surface treatment is performed on a rolling element,
the jig including
a jig main body having a contact surface in contact with the surface of the rolling element, in which
the contact surface includes a first contact surface and a second contact surface that are disposed at opposite positions in the jig main body and support the rolling element at two points, and
the first contact surface and the second contact surface are formed as curved surfaces.

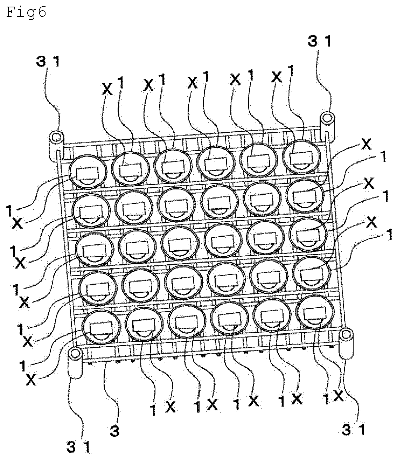

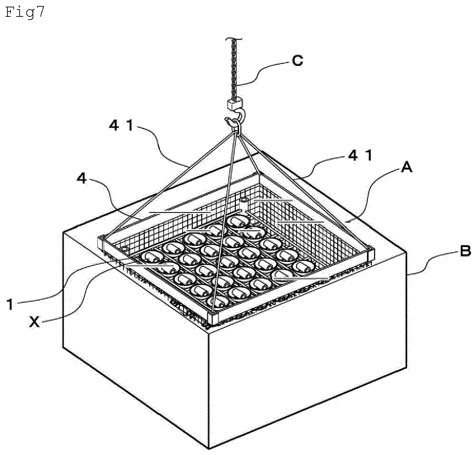

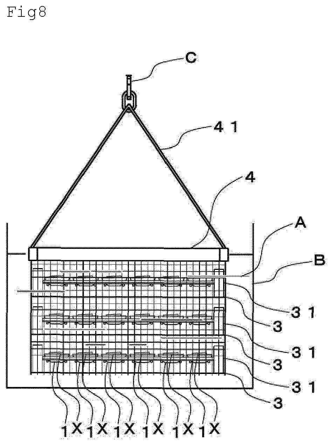

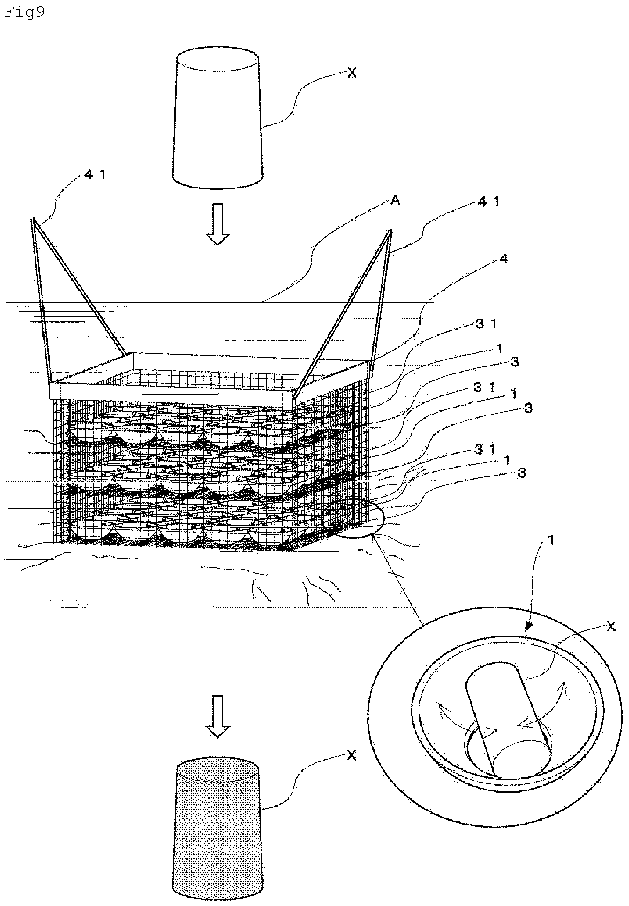

With the rolling element jig of the present invention, it is possible to perform surface treatment on a rolling element, without leaving undyed portions or scratches (see Figs. 6 to 9).

More specifically, as the rolling element jig of the present invention is designed to support the rolling element at two points (the contact points between the rolling element, and the first and second contact surfaces), the contact area between the rolling element and the rolling element jig can be made smaller. Also, as the jig main body is designed to support the rolling element at two points (the contact points between the rolling element, and the first and second contact surfaces), the rolling element set in the rolling element jig of the present invention is moved by the vibration caused by a process of immersing the rolling element jig and the rolling element in a liquid agent (a dyeing solution, a black dye solution, or the like) for the surface treatment, the convection caused by heating of the liquid agent, the flow of the liquid agent caused by motive power (a pump, a stirrer, or the like). As the rolling element moves, the contact points between the rolling element and the rolling element jig change, and the surface treatment can be performed on the rolling element, without any undyed portions or scratches (see Figs. 6 to 9).

Further, as it is possible to perform the surface treatment on the rolling element without leaving undyed portions or scratches, uniform surface treatment can be performed without partial loss of film thickness or damage to the rolling element due to undyed portions (see Figs. 6 to 9).

Also, as the first contact surface and the second contact surface are formed as curved surfaces, the rolling element is less likely to fall off the rolling element jig of the present invention even when the rolling element set in the rolling element jig of the present invention moves.

Further, with the rolling element jig of the present invention, it is possible to provide a novel surface treatment technique for rolling elements, which can be implemented in conventional industrial facilities.

In a preferred embodiment of the present invention, at least one of the first and second contact surfaces of the rolling element jig is formed as a concave surface.

In the preferred embodiment of the present invention, as at least one of the first and second contact surfaces is formed as a concave surface, the rolling element is less likely to fall off the rolling element jig of the present invention.

Also, as at least one of the first and second contact surfaces is formed as a concave surface, contact between rolling elements can be reduced, and it is possible to perform the surface treatment on the rolling element, without leaving undyed portions or scratches (see Figs. 6 to 9).

Further, as it is possible to perform the surface treatment on the rolling element without leaving undyed portions or scratches, uniform surface treatment can be performed without partial loss of film thickness or damage to the rolling element due to undyed portions (see Figs. 6 to 9).

Further, as at least one of the first and second contact surfaces is formed as a concave surface, the jig main body can be designed to be smaller, and the surface treatment can be more efficiently performed on the rolling element.

Also, in a preferred embodiment of the present invention, the jig main body is formed in a bowl-like shape having a rim portion, and the inner surface thereof also serves as the first contact surface and the second contact surface.

As the jig main body is formed in a bowl-like shape having the rim portion, the rolling element is less likely to fall off the rolling element jig of the present invention.

Also, as the jig main body is formed in a bowl-like shape having the rim portion, contact between rolling elements can be reduced, and it is possible to perform the surface treatment on the rolling element, without leaving undyed portions or scratches (see Figs. 6 to 9).

Further, as it is possible to perform the surface treatment on the rolling element without leaving undyed portions or scratches, uniform surface treatment can be performed without partial loss of film thickness or damage to the rolling element due to undyed portions (see Figs. 6 to 9).

Also, as the jig main body is formed in a bowl-like shape having the rim portion, the jig can be designed to be smaller, and the surface treatment can be more efficiently performed on the rolling element.

Further, as the jig main body is formed in a bowl-like shape having the rim portion, the rolling element can be easily set in the rolling element jig.

In a preferred embodiment of the present invention, the jig main body further includes an opening,
the opening is provided on the side facing the rim portion, and
the opening is designed to be smaller than the rim portion.

With the above configuration, it is possible to perform the surface treatment on the rolling element more efficiently, without leaving undyed portions or scratches (see Figs. 6 to 9).

More specifically, the rolling element is set in the rolling element jig of the present invention, and the rolling element jig and the rolling element are immersed in a liquid agent (a dyeing solution, a black dye solution, or the like) for the surface treatment, so that the liquid agent flows between the rim portion and the opening. The rolling element set in the rolling element jig of the present invention is then moved by the flow of the liquid agent. As the rolling element moves, the contact points between the rolling element and the rolling element jig change, and the surface treatment can be performed on the rolling element, without any undyed portions or scratches (see Figs. 6 to 9).

Further, as it is possible to perform the surface treatment on the rolling element without leaving undyed portions or scratches, uniform surface treatment can be performed without partial loss of film thickness or damage to the rolling element due to undyed portions (see Figs. 6 to 9).

Also, as the opening is provided on the side facing the rim portion, the liquid agent (a dyeing solution, a black dye solution, or the like) for the surface treatment does not stay in the rolling element jig when the immersed rolling element jig and rolling element are pulled up. Thus, the surface treatment can be performed on the rolling element more efficiently.

Further, as the opening is designed to be smaller than the rim portion, the rolling element can be easily set in the rolling element jig.

The present invention is also a method for manufacturing surface-treated rolling elements, including setting rolling elements in the rolling element jigs and immersing the rolling elements in a liquid agent for the surface treatment.

As the rolling element jigs described above are used, the surface treatment can be performed on the rolling elements, without leaving undyed portions or scratches. Thus, according to the manufacturing method using the above rolling element jigs, it is possible to provide surface-treated rolling elements without undyed portions or scratches.

Further, as it is possible to perform the surface treatment on the rolling elements without leaving undyed portions or scratches, rolling elements that have been subjected to uniform surface treatment can be provided without partial loss of film thickness or damage to the rolling elements due to undyed portions (see Figs. 6 to 9).

The present invention is also a method for manufacturing a rolling bearing, characteristically using rolling elements manufactured by the manufacturing method described above.

The rolling elements manufactured by the above manufacturing method have no undyed portions and no scratches. Further, the rolling elements manufactured by the above manufacturing method are uniformly surface-treated without partial loss of film thickness or damage to the rolling elements due to undyed portions. Therefore, rolling elements manufactured by the above manufacturing method are used, so that a rolling bearing that excels in aesthetic aspects can be manufactured.

### Advantageous Effects of Invention

With a rolling element jig of the present invention, it is possible to provide a technique for performing surface treatment on a rolling element, without leaving undyed portions or scratches.

Particularly, a preferred embodiment of the present invention can provide a technique capable of performing uniform surface treatment without partial loss of film thickness or damage to a rolling element due to undyed portions.

### Brief Description of Drawings

Fig. 1 is a diagram illustrating a method for performing surface treatment on rolling elements with conventional mesh jigs, and rolling elements manufactured by the method.
Fig. 2 is a perspective view of a rolling element jig of this embodiment.
Fig. 3 is a view of a situation where a rolling element is set in a rolling element jig of this embodiment.
Fig. 4 is a view of a situation where a rolling element of a different size from that shown in Fig. 3 is set in a rolling element jig of this embodiment.
Fig. 5 is a reference cross-sectional view of a situation where a rolling element is set in a rolling element jig of this embodiment.
Fig. 6 is a view of a mesh member holding a rolling element jig of this embodiment.
Fig. 7 is a reference schematic view illustrating a situation where mesh members holding rolling element jigs of this embodiment are stacked on one another, and rolling elements are immersed in a liquid tank.
Fig. 8 is a reference cross-sectional view illustrating a situation where mesh members holding rolling element jigs of this embodiment are stacked on one another, and rolling elements are immersed in a liquid tank.
Fig. 9 is a schematic diagram illustrating the behavior of a rolling element during a blackening process in a case where rolling elements are set in rolling element jigs of this embodiment.
Fig. 10 is a diagram showing the flow of surface coating formation using rolling element jigs of this embodiment.
Fig. 11 is a diagram showing a rolling bearing using rolling elements manufactured with rolling element jigs of this embodiment.

### Description of Embodiments

In the description below, a rolling element jig 1 will be described. However, it goes without saying that the technical scope of the present invention is not limited to the embodiment.

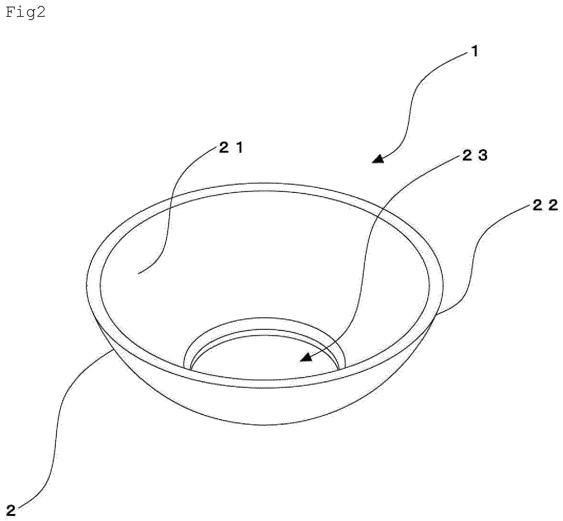

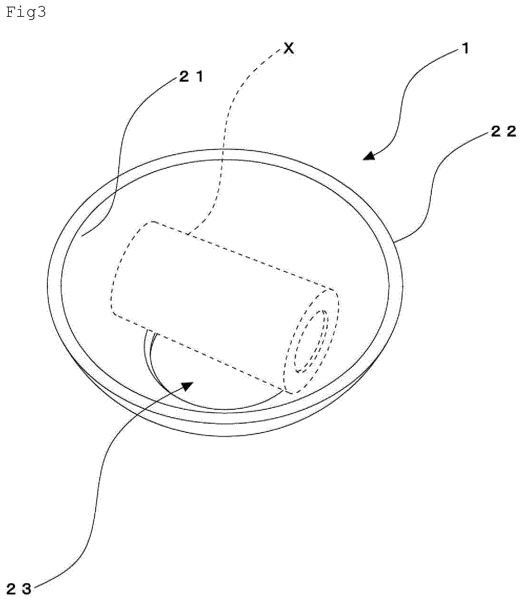

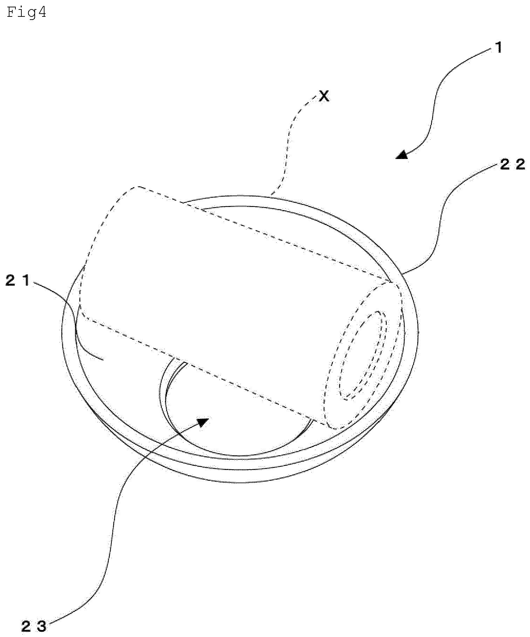

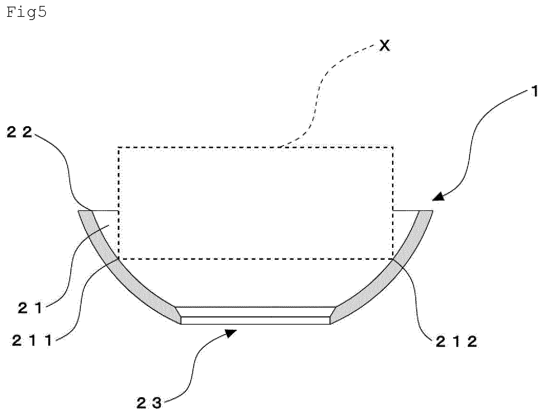

First, a jig main body 2 included in a rolling element jig of this embodiment is described, with reference to Figs. 2 to 9.

In this embodiment, the jig main body 2 is formed in a bowl-like shape having a rim portion 22, and its inner surface supports a rolling element X at two points (the contact points between the rolling element X, and first and second contact surfaces 211 and 212) (see Figs 2 to 5).

As the jig main body 2 is formed in a bowl-like shape having the rim portion 22, the rolling element X is less likely to fall off the rolling element jig 1.

Also, as the jig main body 2 is formed in a bowl-like shape having the rim portion 22, contact between rolling elements X can be reduced, and it is possible to perform surface treatment on the rolling element X, without leaving undyed portions or scratches (see Figs. 6 to 9).

Further, as the jig main body 2 is formed in a bowl-like shape having the rim portion 22, the jig can be designed to be smaller, and the surface treatment can be more efficiently performed on the rolling element X.

Also, as the rolling element jig 1 is formed in a bowl-like shape having the rim portion 22, the rolling element X can be easily set in the rolling element jig 1.

Here, in this embodiment, the first and second contact surfaces 211 and 212 that support the rolling element X are designed to be spherical surfaces.

However, at least one of the first and second contact surfaces 211 and 212 that support the rolling element X may be formed as a concave surface.

As at least one of the first and second contact surfaces 211 and 212 is formed as a concave surface, the rolling element X is less likely to fall off the rolling element jig 1.

Also, as at least one of the first and second contact surfaces 211 and 212 is formed as a concave surface, contact between rolling elements X can be reduced, and it is possible to perform the surface treatment on the rolling element X, without leaving undyed portions or scratches (see Figs. 6 to 9).

Further, as it is possible to perform the surface treatment on the rolling element without leaving undyed portions or scratches, uniform surface treatment can be performed without partial loss of film thickness or damage to the rolling element due to undyed portions (see Figs. 6 to 9).

Also, as at least one of the first and second contact surfaces 211 and 212 is formed as a concave surface, the jig main body 2 can be designed to be smaller, and the surface treatment can be more efficiently performed on the rolling element X.

However, the jig main body 2 is only required to include the first contact surface 211 and the second contact surface 212 that support the rolling element X at two points.

Further, the first contact surface 211 and the second contact surface 212 are preferably disposed at opposite positions in the jig main body 2, and the first contact surface 211 and the second contact surface 212 are preferably formed as curved surfaces.

As the rolling element jig 1 is designed to support the rolling element X at two points (the contact points between the rolling element X, and the first and second contact surfaces 211 and 212), the contact area between the rolling element X and the rolling element jig 1 can be made smaller. Also, as the jig main body 2 is designed to support the rolling element X at two points (the contact points between the rolling element X, and the first and second contact surfaces 211 and 212), the rolling element X set in the rolling element jig 1 moves when the rolling element jig 1 and the rolling element X are immersed in a liquid agent A (a dyeing solution, a black dye solution, or the like) for the surface treatment. As the rolling element X moves, the contact points between the rolling element X and the rolling element jig 1 change, and the surface treatment can be performed on the rolling element X, without any undyed portions or scratches (see Figs. 6 to 9) .

Further, as it is possible to perform the surface treatment on the rolling element without leaving undyed portions or scratches, uniform surface treatment can be performed without partial loss of film thickness or damage to the rolling element due to undyed portions (see Figs. 6 to 9).

Also, as the first contact surface 211 and the second contact surface 212 are formed as curved surfaces, the rolling element X is less likely to fall off the rolling element jig 1 even when the rolling element X set in the rolling element jig 1 moves.

Further, the jig main body 2 preferably has such a size as not to come into contact with the rolling element X set in another rolling element jig 1 disposed adjacent to the rolling element jig 1 in a state where the rolling element X is set in the jig main body 2. With the above configuration, it is possible to perform the surface treatment on the rolling element X, without leaving undyed portions or scratches (see Figs. 6 to 9).

Further, as it is possible to perform the surface treatment on the rolling element without leaving undyed portions or scratches, uniform surface treatment can be performed without partial loss of film thickness or damage to the rolling element due to undyed portions (see Figs. 6 to 9).

The jig main body 2 is also preferably made of a metallic material.

As the jig main body 2 is made of a metallic material, the rolling element X jig can be made durable.

A preferred material as the material of the jig main body 2 may be an iron material, for example.

However, there are no particular restrictions on the material of the jig main body 2.

In this embodiment, the jig main body 2 also has an opening 23, and the opening 23 is provided on the side facing the rim portion 22 and is designed to be smaller than the rim portion 22.

With the above configuration, it is possible to perform the surface treatment on the rolling element X more efficiently, without leaving undyed portions or scratches (see Figs. 6 to 9).

More specifically, the rolling element jig 1 and the rolling element X are immersed in the liquid agent A (a dyeing solution, a black dye solution, or the like) for the surface treatment, so that the liquid agent flows between the rim portion 22 and the opening 23. By virtue of the flow of the liquid agent, the rolling element X set in the rolling element jig 1 moves, and the contact points between the rolling element X and the rolling element jig 1 change. Accordingly, with the above configuration, it is possible to perform the surface treatment on the rolling element X, without leaving undyed portions or scratches (see Figs. 6 to 9).

Further, as it is possible to perform the surface treatment on the rolling element without leaving undyed portions or scratches, uniform surface treatment can be performed without partial loss of film thickness or damage to the rolling element due to undyed portions (see Figs. 6 to 9).

Also, as the opening 23 is provided on the side facing the rim portion 22, the liquid agent A (a dyeing solution, a black dye solution, or the like) for the surface treatment does not stay in the rolling element jig 1 when the immersed rolling element jig 1 and rolling element X are pulled up. Accordingly, with the above configuration, the surface treatment can be performed more efficiently on the rolling element X.

Further, as the opening 23 is designed to be smaller than the rim portion 22, the rolling element X can be easily set in the rolling element jig 1.

As for the opening 23, there are no restrictions on the shape, the size, the number, and the position of the opening 23.

In this embodiment, two or more rolling element jigs 1 are provided in a mesh member 3 (see Figs. 6 to 9).

As the mesh member 3 in which two or more rolling elements X are set is used, the surface treatment can be performed more efficiently.

Here, the mesh member 3 is preferably a wire mesh.

Further, the mesh member 3 preferably has three or more, or more preferably, four or more rod portions 31 extending in the same direction that is a direction perpendicular to the plane of the mesh member 3.

With the above configuration, mesh members 3 can be stacked on one another in such a manner that the rolling elements X set in the rolling element jigs 1 do not come into contact with the stacked meshes. Thus, the surface treatment can be performed on the rolling elements X more efficiently.

However, in the present invention, there is no need to use the mesh members 3 (members having meshes), and supporting members each supporting two or more rolling element jigs 1 may be used, as long as the rolling element jigs 1 can be set therein. Here, examples of the supporting members include plate members, lattice members, fence members, and the like.

Note that, in this embodiment, rolling element jigs 1 and a mesh member 3 are formed with combinations of different components. However, rolling element jigs 1 and a mesh member 3 may be integrally molded.

Further, in this embodiment, rolling element jigs 1 and a mesh member 3 are welded together. However, the rolling element jigs 1 may be designed to be detachable.

Also, in this embodiment, the surface treatment is performed on the rolling elements X, with the use of a basket 4 containing the mesh members 3 each having two or more rolling element jigs 1 set therein (see Figs. 6 to 9).

With the use of the basket 4 containing the mesh members 3 each having two or more rolling element jigs 1 set therein, the surface treatment can be performed more efficiently.

Further, the basket 4 is preferably in a form including a handle 41 that is formed with string members.

With the above configuration, the surface treatment can be performed on the rolling elements X more easily.

However, there are no particular restrictions on the material, the shape, and the size of the basket 4, as long as the mesh members 3 can be set in the basket 4.

Note that, in this embodiment, the basket 4 and the mesh members 3 are formed with combinations of different components. However, the basket 4 and the mesh members 3 may be integrally molded.

The present invention is also a method for manufacturing surface-treated rolling elements, including setting the rolling elements in rolling element jigs and immersing the rolling elements in a liquid agent for the surface treatment.

By setting the rolling elements in the rolling element jigs mentioned above and immersing the rolling elements in the liquid agent for the surface treatment, it is possible to manufacture surface-treated rolling elements, without leaving undyed portions or scratches.

Further, as it is possible to perform the surface treatment on the rolling elements without leaving undyed portions or scratches, rolling elements that have been subjected to uniform surface treatment can be manufactured without partial loss of film thickness or damage to the rolling elements due to undyed portions (see Figs. 6 to 9).

In the description below, a method for manufacturing surface-treated rolling elements X with the rolling element jigs 1 described above is described.

In this specification, a "rolling element X" refers to an object that rolls. Examples of the rolling elements X include substantially truncated cone-shaped objects, substantially columnar objects, substantially cylindrical objects, substantially spherical objects, and the like. Of these objects, the rolling elements X are preferably substantially truncated cone-shaped objects, substantially columnar objects, or substantially cylindrical objects.

Also, there are no particular restrictions on the material of the rolling elements X, and the rolling elements X may be made of metal, wood, or rubber, for example.

Here, the metal is preferably steel or iron.

Further, there are no restrictions on use of the rolling element X, and the rolling element X is preferably a rolling element X (a roller) for a rolling bearing, for example.

The size of the rolling elements X is not limited to any particular one either, as long as the rolling elements X can be set in the rolling element jig 1.

In this specification, the "surface treatment" includes chemical conversion treatment, film formation by coating with a liquid agent, and surface treatment through surface processing/modification.

Here, the chemical conversion treatment may be blackening treatment, passivating treatment (passivation), sulfurizing treatment, chromate treatment, phosphate coating, or the like.

Meanwhile, the film formation by coating with a liquid agent may be coating film formation with a liquid metal, dyeing, silicone film formation, oil film formation, or the like.

Further, the surface treatment through surface processing/modification may be degreasing, polishing, or the like.

Conventionally, mesh jigs have been used in the blackening treatment for rolling elements.

However, the conventional method has a problem, because a rolling element X has a mesh mark due to contact with a mesh jig, undyed portions due to overlapping with another rolling element, scratches due to contact with another rolling element, or the like (see Fig. 1).

Also, according to a conventional method, the film thickness of a rolling element becomes uneven due to factors such as an undyed portion.

Therefore, the rolling element jig 1 of the present invention is preferably used in the blackening treatment.

In this specification, the blackening treatment refers to a process of forming a black oxide coating on a metal surface, and the blackening may be Fellmight treatment, SOB treatment, Fe3O4 treatment, alkaline treatment, magnetite treatment, or the like, for example.

By the blackening treatment, rolling elements X that excel in rust prevention, wear resistance, and lubricity can be manufactured.

The rolling element jig 1 is then used, so that blackening can be performed on the rolling elements X, without leaving undyed portions or scratches. As the surface treatment is blackening, it is possible to provide the rolling elements X having a greater rust preventing effect, a higher wear resistance, and a higher lubricity.

Also, as the rolling element jig 1 is used, it is possible to perform blacking on the rolling elements X without leaving undyed portions or scratches, and thus, rolling elements X that excels in aesthetic aspects can be provided.

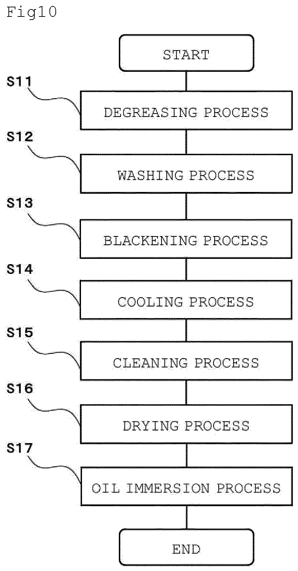

In the description below, a case where the method for manufacturing rolling elements X of the present invention is applied to blackening of rollers is described in detail, with reference to Fig. 10.

The method for manufacturing blackened rollers (rolling elements X) according to this embodiment includes a degreasing process S11, a washing process S12, a blackening process S13, a cooling process S14, a cleaning process S15, a drying process S16, and an oil immersion process S17 (see Fig. 10).

Each process is described below in detail.

### (Degreasing Process S11)

The degreasing process is a process of degreasing rollers (rolling elements X), using a degreasing agent.

Here, the degreasing agent may be either an alcohol-based degreasing agent or a petroleum-solvent degreasing agent.

Here, in the degreasing process, the rolling element jigs 1 in which the rollers (rolling elements X) are set are immersed in a degreasing tank filled with the degreasing agent, so that degreasing can be performed on the rollers (rolling elements X).

As the rolling element jigs 1 in which the rollers (rolling elements X) are set are immersed in the degreasing tank filled with the degreasing agent, the rollers (rolling elements X) moves with the vibration of the degreasing tank and the flow of the liquid agent, and the contact points between the rollers (rolling elements X) and the rolling element jigs 1 change. Accordingly, the rolling element jigs 1 in which the rollers (rolling elements X) are set are immersed in the degreasing tank filled with the degreasing agent, so that degreasing can be performed on the rollers (rolling elements X) more efficiently.

In the case of immersion in the degreasing tank filled with the degreasing agent, the immersion time is preferably five minutes or longer.

Through the immersion in the degreasing tank for a time equal to or longer than the lower limit, more reliable degreasing can be performed on the rollers (rolling elements X).

Also, in the case of immersion in the degreasing tank filled with the degreasing agent, the immersion time is preferably 15 minutes or shorter.

### (Washing Process S12)

The washing process S12 is a process of washing the rollers (rolling elements X) with water after the degreasing process S11. As the rollers (rolling elements X) are washed with water after the degreasing process S11, the degreasing agent and the oil remaining on the rollers (rolling elements X) can be removed.

Here, a shower can be used in the washing process.

### (Blackening Process S13)

The blackening process is a process of performing blackening on the rollers (rolling elements X) by immersing the rollers (rolling elements X) and the rolling element jigs 1 in a black dye solution (the liquid agent A for the surface treatment).

In a preferred embodiment of the present invention, the rolling element jigs 1 in which the rollers (rolling elements X) are set are immersed in a liquid tank filled with the black dye solution (the liquid agent A for the surface treatment), so that blackening can be performed on the rollers (rolling elements X).

As the rolling element jigs 1 in which the rollers (rolling elements X) are set are immersed in the liquid tank filled with the black dye solution (the liquid agent A for the surface treatment), the rollers (rolling elements X) set in the rolling element jigs 1 moves with the vibration of the liquid tank and the flow of the liquid agent, and the contact points between the rollers (rolling elements X) and the rolling element jigs 1 change. Thus, it is possible to perform blackening on the rollers (rolling elements X) without leaving undyed portions or scratches.

Further, as it is possible to perform the surface treatment on the rolling elements without leaving undyed portions or scratches, blackening can be performed on the rollers (rolling elements X) with uniform film thickness, but without partial loss of film thickness or damage to the rolling elements due to undyed portions (see Figs. 6 to 9).

In the case of immersion in the liquid tank filled with the black dye solution (the liquid agent A for the surface treatment), the immersion time is preferably five minutes or longer.

Through the immersion for a time equal to or longer than the lower limit, more reliable blackening can be performed on the rollers (rolling elements X).

Also, in the case of immersion in the liquid tank B filled with the black dye solution (the liquid agent A for the surface treatment), the immersion time is preferably 60 minutes or shorter.

Through the immersion for a time equal to or shorter than the upper limit, blackening can be performed on the rollers (rolling elements X).

Further, the blackening process may be a mode for heating at a temperature equal to or higher than the temperature at which the liquid agent evaporates.

As heating is performed at a temperature equal to or higher than the lower limit, convection of the liquid agent occurs. Due to the convection of the black dye solution, the rollers (rolling elements X) set in the rolling element jigs 1 then move, and the contact points between the rollers (rolling elements X) and the rolling element jigs 1 change. Thus, it is possible to perform blackening on the rollers (rolling elements X) without leaving undyed portions or scratches.

Further, as it is possible to perform the surface treatment on the rolling elements without leaving undyed portions or scratches, blackening can be performed on the rollers (rolling elements X) with uniform film thickness, but without partial loss of film thickness or damage to the rolling elements due to undyed portions (see Figs. 6 to 9).

Here, the heating temperature in the liquid tank filled with the black dye solution (the liquid agent A for the surface treatment) is preferably 100°C or higher, more preferably, 120°C or higher, or even more preferably, 130°C or higher.

As heating is performed at a temperature equal to or higher than the lower limit, the water contained in the black dye solution evaporates. As the water evaporates, convection of the liquid agent occurs. Due to the convection of the black dye solution (the liquid agent A for the surface treatment), the rollers (rolling elements X) set in the rolling element jigs 1 then move, and the contact points between the rollers (rolling elements X) and the rolling element jigs 1 change. Thus, it is possible to perform blackening on the rollers (rolling elements X) without leaving undyed portions or scratches.

Further, the heating temperature in the liquid tank filled with the black dye solution (the liquid agent A for the surface treatment) is preferably 145°C or lower.

### (Cooling Process S14)

The cooling process is a process of cooling the rollers (rolling elements X) after the blackening process S15 and the blackening process S13.

Here, in the cooling process, the rolling element jigs 1 in which the rollers (rolling elements X) are set are immersed in a water tank, so that cooling can be performed on the rollers (rolling elements X).

### (Cleaning Process S15)

The cleaning process is a process of cleaning the rollers (rolling elements X) after the cooling process S14.

The cleaning process may include a process of performing washing with water.

Further, it is more preferable to perform cleaning with hot water in the cleaning process.

Here, in the cooling process, the rolling element jigs 1 in which the rollers (rolling elements X) are set are immersed in a hot water tank, so that cleaning can be performed on the rollers (rolling elements X).

### (Drying Process S16)

The drying process is a process of drying the rollers (rolling elements X) after the cleaning.

The drying process may be a mode for performing drying with an air gun.

### (Oil Immersion Process S17)

The oil immersion process is a process of coating the dried rollers (rolling elements X) with antirust oil.

Here, in the oil immersion process, the rolling element jigs 1 in which the rollers (rolling elements X) are set are immersed in an oil tank filled with the antirust oil, so that the rollers (rolling elements X) can be coated with the rust-preventing oil.

However, in the method for manufacturing the rolling elements X of the present invention, it is not always necessary to carry out all the above steps, and the steps can be selected as appropriate, in accordance with the material and the surface conditions of the rolling elements X.

In the description below, a method for manufacturing a rolling bearing 5 using the above rolling elements X is described.

The method for manufacturing the rolling bearing 5 using the above rolling elements X may be a method disclosed in JP 5895493 B1. More specifically, according to the method, an inner ring having an orbital surface, an outer ring 51 having an orbital surface facing the orbital surface of the inner ring, and a plurality of rolling elements X rollably disposed between the orbital surface of the inner ring and the orbital surface of the outer ring 51 may be combined, to manufacture the rolling bearing 5.

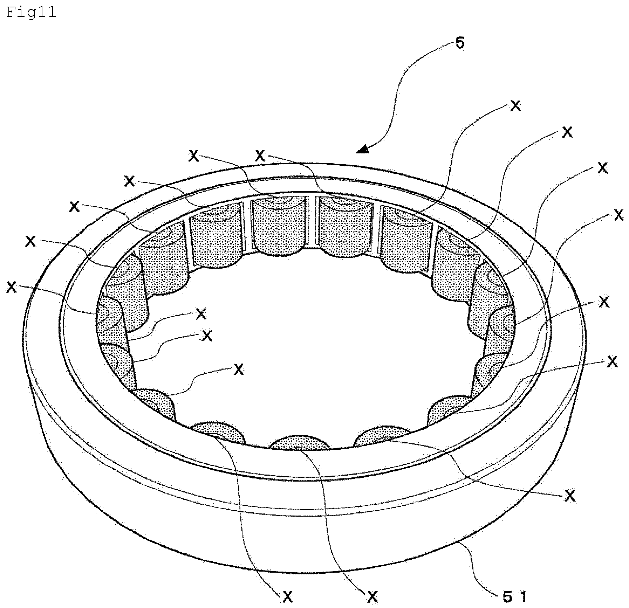

Further, another method for manufacturing the rolling bearing 5 using the above rolling elements X may be a method for manufacturing the rolling bearing 5 by combining a plurality of rollably-arranged rolling elements X with the outer ring 51 having an orbital surface (see Fig. 11).

However, in the present invention, a method for manufacturing the rolling bearing 5 using the above rolling elements X is not limited to any particular mode, and any known manufacturing method can be adopted.

### Examples

Blackened (surface-treated) rollers (rolling elements X) were manufactured by a manufacturing method that includes the processes from the degreasing process S11 to the oil immersion process S17 (see Fig. 10) and have the above mentioned conditions changed in various manner.

When the rollers (rolling elements X) were visually checked, exposure of metal before blackening was not observed. That is, it was found that, with the use of the rolling element jigs 1 of this embodiment, it is possible to perform blackening (surface treatment) on the rolling elements X without leaving undyed portions or scratches.

It was also found that, as it is possible to perform the surface treatment on the rolling elements without leaving undyed portions or scratches, blackening can be performed on the rollers (rolling elements X) with uniform film thickness, but without partial loss of film thickness or damage to the rolling elements due to undyed portions (see Figs. 6 to 9).

### Industrial Applicability

The present invention can be used for the surface treatment to be performed on rolling elements X.

### Reference Signs List

- 1: Rolling element jig
- 2: Jig main body
- 21: Contact surface
- 211: First contact surface
- 212: Second contact surface
- 22: Rim portion
- 23: Opening
- 3: Mesh member
- 31: Rod portion
- 4: Basket
- 41: Handle
- 5: Rolling bearing
- 51: Outer ring
- A: Liquid agent for surface treatment
- B: Liquid tank
- C: Crane
- X: Rolling element

## Claims

1. A rolling element jig that is a jig to be used when surface treatment is performed on a rolling element,
the rolling element jig comprising
a jig main body having a contact surface in contact with a surface of the rolling element, wherein
the contact surface includes a first contact surface and a second contact surface that are disposed at opposite positions in the jig main body and support the rolling element at two points, and
the first contact surface and the second contact surface are formed as curved surfaces.

2. The rolling element jig according to claim 1, wherein
the rolling element is selected from among a substantially truncated cone-shaped object, a substantially columnar object, a substantially cylindrical object, and a substantially spherical object, and
the first contact surface and the second contact surface are formed as concave surfaces.

3. The rolling element jig according to claim 1 or 2, wherein
the rolling element is selected from among a substantially truncated cone-shaped object, a substantially columnar object, and a substantially cylindrical object,
the jig main body is formed in a bowl-like shape having a rim portion, and an inner surface of the jig main body also serves as the first contact surface and the second contact surface, and
the jig main body has an opening on a side facing the rim portion, the opening being smaller than the rim portion.

4. The rolling element jig according to any one of claims 1 to 3, wherein the jig main body is made of a metallic material.

5. The rolling element jig according to any one of claims 1 to 4, wherein the surface treatment is chemical conversion treatment.

6. A method for manufacturing a surface-treated rolling element,
the method comprising setting a rolling element in the rolling element jig according to any one of claims 1 to 5, and immersing the rolling element in a liquid agent for the surface treatment.

7. A method for manufacturing a rolling bearing,
the method comprising using a rolling element manufactured by the method for manufacturing a rolling element according to claim 6.
